# EUROPÄISCHE PATENTANMELDUNG

(11) **EP 2 402 737 A1**
(43) Veröffentlichungstag der Anmeldung: **04.01.2012**
(21) Anmeldenummer: 11004395.7
(22) Anmeldetag: 28.05.2011
(51) Int. Cl.: G01N 21/35, B60W 40/06, G01N 21/21

(54) **Verfahren und Vorrichtung zur Steuerung einer Traktionshilfe eines Fahrzeuges**

(30) Priorität: 30.06.2010 DE 102010025723; 30.03.2011 DE 102011015510
(71) Anmelder: WABCO GmbH, 30453 Hannover (DE)
(72) Erfinder: Breuer, Karsten, 31867 Lauenau (DE); Dieckmann, Thomas, 30982 Pattensen (DE); Hanslik, Daniel, 30916 Isernhagen (DE); Hoffmann, Guido, 30938 Burgwedel (DE); Lucas, Johann, 31319 Sehnde (DE); Sandkühler, Dirk, 30926 Seelze (DE)
(74) Vertreter: Rabe, Dirk-Heinrich

(57) **Zusammenfassung**

Die Beschreibung bezieht sich auf ein Verfahren und eine Vorrichtung zur Steuerung einer Traktionshilfe (80) eines Fahrzeugs (60). Das Verfahren umfasst ein Aussenden von Licht zumindest einer Wellenlänge auf eine Fahrbahnoberfläche (1a) unter dem Fahrzeug (60), Detektieren von an der Fahrbahnoberfläche (1a) reflektiertem Licht der zumindest einen Wellenlänge, Ermitteln zumindest einer Information über die Beschaffenheit der Fahrbahnoberfläche (1 a) anhand des detektieren reflektierten Lichts der zumindest einen Wellenlänge, Ermitteln anhand der zumindest einen Information, ob der Reibwert der Fahrbahnoberfläche (1 a) eine Traktionshilfe (80) erforderlich macht oder ob die Traktionshilfe (80) nicht mehr erforderlich ist; und Steuern der Traktionshilfe (80), wenn ermittelt wurde ob die Traktionshilfe (80) erforderlich ist oder nicht mehr erforderlich ist.

## Beschreibung

Die vorliegende Beschreibung bezieht sich auf Traktionshilfen für Fahrzeuge. Insbesondere bezieht sich die vorliegende Beschreibung auf ein Verfahren und eine Vorrichtung zur Steuerung von automatischen Traktionshilfen bei Nutzfahrzeugen.

Insbesondere für Nutzfahrzeuge sind automatische Traktionshilfen bekannt, welche es dem Fahrer erlauben bei unsicheren Straßenverhältnissen die Traktionshilfe zuzuschalten, wodurch das manuelle und zeitaufwändige Anlegen von Schneeketten vermieden wird. Als Traktionshilfen sind beispielsweise automatische Schneeketten bekannt, welche bei Nutzfahrzeugen, insbesondere bei Lastkraftwagen an den Antriebsachsen angebracht sein können und mittels eines Schleudermechanismus zwischen Fahrbahn und Reifen ausgebracht werden um so die Traktion auf einem rutschigen Untergrund, wie einer verschneiten oder vereisten Fahrbahn zu erhöhen. Diese bekannten automatischen Schneeketten werden manuell von dem Fahrer bedient.

Als Traktionshilfe für Nutzfahrzeuge ist es auch bekannt, bei mehrachsigen Fahrzeugen, welche beispielsweise über eine dritte Hilfsachse verfügen, diese Hilfsachsen kurzfristig zu entlasten bzw. anzuheben und somit die Achslast auf die verbleibenden Achsen und insbesondere auf angetriebene Achsen zu erhöhen. Durch die erhöhte Achslast kann auch eine erhöhte Traktion bei rutschigen Fahrbahnverhältnissen erreicht werden. Dabei ist es möglich die offiziell zulässige maximale Achslast kurzfristig zu überschreiten, um die nötige Traktion beispielsweise als Anfahrhilfe zu erreichen.

Eine solche Achslastregelung ist beispielsweise aus den Dokumenten DE 39 29 788 C2, DE 189 21 036 A1, DE 10 2004 010 548 A1, DE 10 2004 010 561 A1 und EP 0 411 352 B1 bekannt.

Um die Achslastverlagerung beziehungsweise Achslastentlastung der Hilfsachse zur Traktionshilfe auszuführen, muss der Fahrer zunächst den rutschigen beziehungsweise gefährlichen Untergrund erkennen, und dann manuell die entsprechende Traktionshilfe aktivieren.

Es ist eine Aufgabe der vorliegenden Erfindung die Nachteile des Standes der Technik zu überwinden, insbesondere ist die Erkennung durch den Fahrer und die manuelle Betätigung bei Irrtum in der einen als auch der anderen fehlerhaften Annahme Risikobehaftet, da in beiden Fällen ein instabiles Fahrzeugverhalten resultieren kann.

### Zusammenfassung der Erfindung

Zur Lösung der Aufgabe schlägt die Erfindung ein Verfahren gemäß Anspruch 1 und eine Vorrichtung gemäß Anspruch 8 zur Steuerung einer Traktionshilfe eines Fahrzeugs vor.

Ferner bezieht sich die Erfindung auf ein Fahrzeug, welches mit einer entsprechenden Vorrichtung ausgestattet ist und in welchem das erfindungsgemäße Verfahren ausgeführt wird.

Das erfindungsgemäße Verfahren zur Steuerung einer Traktionshilfe eines Fahrzeugs umfasst das Aussenden von Licht von zumindest einer Wellenlänge auf eine Fahrbahnoberfläche unter dem Fahrzeug, ein Detektieren von an der Fahrbahnoberfläche reflektiertem Licht der zumindest einen Wellenlänge, ein Ermitteln zumindest einer Information über die Beschaffenheit der Fahrbahnoberfläche anhand des detektierten reflektierten Lichts der zumindest einen Wellenlänge, ein Ermitteln anhand der zumindest einen Information, ob der Reibwert der Fahrbahnoberfläche eine Traktionshilfe erforderlich macht und/oder ob die Traktionshilfe nicht mehr erforderlich ist, ein entsprechendes Steuern der Traktionshilfe, wenn ermittelt wurde ob die Traktionshilfe erforderlich ist oder nicht mehr erforderlich ist.

Die Vorrichtung zur Steuerung einer Traktionshilfe eines Fahrzeugs umfasst einen optischen Oberflächensensor zur Ermittlung zumindest einer Information über die Beschaffenheit einer Fahrbahnoberfläche und eine Steuerung, welche mit dem optischen Oberflächensensor und der Traktionshilfe verbunden ist und anhand der zumindest einen Information über die Fahrbahnoberfläche die Traktionshilfe steuert.

Mittels der optischen Ermittlung der Beschaffenheit der Fahrbahnoberfläche, beziehungsweise mittels dem Ermitteln von zumindest einer Information über die Fahrbahnbeschaffenheit kann automatisch, zuverlässig und berührungslos ermittelt werden, ob die Fahrbahnoberfläche nass, vereist, schneebedeckt und/oder trocken ist, das heißt in welchem Zustand die Fahrbahnoberfläche ist. Ferner kann ermittelt werden, welcher Art die Fahrbahn ist, das heißt ob es sich bei der Fahrbahn um eine Asphalt, eine Betonfahrbahn oder eine andere Fahrbahnoberfläche handelt. Der optische Sensor ohne direkten Fahrbahnkontakt ist weniger störanfällig, insbesondere gegenüber Vereisung und aufgewirbelten Schnee, da er über keine mechanischen Teil verfügt. Ferner kann der optische Sensor geschützt an einer beliebigen stelle im unteren Bereich des Fahrzeugsangeordnet werden.

Auch kann mit dem optischen Sensor ermittelt werden, ob es sich bei einer vereisten Fahrbahn um eine bestimmte Eisdicke oder bei einem Wasserfilm um eine bestimmte Wasserfilmdicke handelt. Der optische Sensor liefert daher genauere Informationen über die Beschaffenheit, insbesondere über den Zustand der Fahrbahnoberfläche, als z.B. mechanische Sensoren.

Aus dieser Information über die Beschaffenheit der Fahrbahn kann auf einen Reibwert der Fahrbahnoberfläche geschlossen werden, zum Beispiel, wenn dieser durch Eis oder Schnee auf der Fahrbahn verringert ist. Wird ein entsprechend verringerter Reibwert ermittelt, wird die Traktionshilfe automatisch zugeschaltet. Es ist auch möglich, das vor der Zuschaltung der Traktionshilfe weitere Parameter, wie die Fahrzeuggeschwindigkeit, das vorhanden sein einer Steigung oder anderes abgefragt wird.

Die Vorrichtung und das Verfahren erlauben es, die Traktionshilfe zuzuschalten, sobald eine Fahrbahnoberfläche mit einem geringen Reibwert erkannt wurde, und somit gegebenenfalls bevor eine gefährliche Situation für das Fahrzeug entstehen kann.

Mit dem Verfahren und der Vorrichtung kann vorteilhaft eine Traktionshilfe bereits bei stehendem Fahrzeug automatisch zugeschaltet werden, da der optische Oberflächensensor, beziehungsweise das optische Verfahren die rutschige Fahrbahnoberfläche beziehungsweise den verminderten Reibwert bereits unabhängig von einer Fahrzeugbewegung erkennen kann.

Das Verfahren und die Vorrichtung kann auch verwendet werden, um eine Traktionshilfe abzuschalten, wenn dies der Zustand beziehungsweise die Beschaffenheit der Fahrbahnoberfläche nicht mehr erforderlich macht. Erkennt der optische Oberflächensensor beispielsweise, dass die Fahrbahn nicht mehr vereist und/oder nicht mehr schneebedeckt ist, sondern beispielsweise nass oder trocken ist, so kann die Traktionshilfe automatisch abgeschaltet werden. Ein unnötiger Verschleiß kann verhindert werden. Sollte sich der Fahrbahnzustand wieder verschlechtern und eventuell wieder eine vereiste oder verschneite Fahrbahnoberfläche erkannt werden, so kann die Traktionshilfe wieder zugeschaltet werden.

Die Traktionshilfe kann automatische Schneeketten umfassen, wie sie an sich dem Fachmann bekannt sind. Die Traktionshilfe kann auch eine Achsentlastung umfassen, wie sie dem Fachmann ebenfalls aus dem Stand der Technik bekannt ist. Die Traktionshilfe kann auch ein Abbremsen der angetriebenen Räder umfassen. Die Vorrichtung kann auch eine Kombination aus den genannten Traktionshilfen umfassen.

Mit dem Verfahren und der Vorrichtung kann vorteilhaft eine Traktionshilfe bereits bei stehendem Fahrzeug automatisch zugeschaltet werden, da der optische Oberflächensensor beziehungsweise das optische Verfahren die rutschige Fahrbahnoberfläche beziehungsweise den verminderten Reibwert bereits vor dem Anfahren erkennen kann.

Der optische Oberflächensensor der Vorrichtung kann über eine Lichtquelleneinheit zum Aussenden von Licht von zumindest einer Wellenlänge auf den Untergrund und zumindest einen Detektor umfassen, um von dem Untergrund reflektiertes Licht zu detektieren.

Der Oberflächensensor kann neben dem ersten Detektor einen zweiten Detektor umfassen, wobei der erste Detektor zum Erfassen von diffus reflektiertem Licht und der zweite Detektor zum Erfassen von spiegelnd reflektiertem Licht geeignet sind. Es können zumindest zwei Polarisatoren vorgesehen sein, wobei ein erster Polarisator mit einer ersten Polarisationseinrichtung dem ersten Detektor zugeordnet ist. Der Lichtquelleneinheit kann ein Lichtquellenpolarisator und/oder dem zweiten Detektor kann ein zweiter Polarisator zugeordnet sein, dessen Polarisierungsrichtung(en) im Wesentlichen senkrecht zu der ersten Polarisierungsrichtung des ersten Polarisators ausgerichtet ist/sind. Sind zumindest zwei Polarisatoren bzw. Polarisationsfilter vorgesehen, ist der erste Polarisator an dem ersten Detektor angeordnet, welcher nur Lichtwellen in der ersten Polarisationsrichtung zu dem ersten Detektor durchlässt. Ist ein Lichtquellenpolarisator an der Lichtquelleneinheit vorgesehen, ist dessen Polarisationsrichtung im Wesentlichen senkrecht zu der ersten Polarisationsrichtung des ersten Polarisators angeordnet, und das von dem Sensor ausgesandte Licht ist in einer Richtung im Wesentlichen senkrecht zu der ersten Polarisationsrichtung polarisiert, so dass an dem ersten Detektor polarisiertes, spiegelnd reflektiertes Licht herausgefiltert und nur diffus reflektiertes Licht detektiert wird. Ein ähnlicher Effekt kann erreicht werden, wenn ein zweiter Polarisator vor dem zweiten Detektor angeordnet ist, dessen Polarisationsrichtung im Wesentlichen senkrecht zu der ersten Polarisationsrichtung ausgerichtet ist. Der zweite Polarisator kann alternativ oder zusätzlich zu dem Lichtquellenpolarisator verwendet werden. Es kann auch vorgesehen sein, in der Lichtquelleneinheit bereits polarisiertes Licht zu erzeugen

Die Lichtquelleneinheit kann zum Aussenden von Licht von zumindest zwei voneinander verschiedenen Wellenlängen oder zum Aussenden von mehreren Wellenlängen auf den Untergrund bzw. die Fahrbahnoberfläche ausgelegt sein. Dazu kann die Lichtquelleneinheit beispielsweise mehrere Lichtquellen umfassen. Die Verwendung mindestens zweier, vorzugsweise drei von einander verschiedener Wellenlängen erlaubt es, den Sensor in spektraler Weise zu betreiben. Durch die Verwendung von Wellenlängen, welche z.B. von Eis oder Wasser besonders gut absorbiert werden, können Eis bzw. Wasser auf der Fahrbahn bzw. Fahrbahnoberfläche erkannt werden, wenn das reflektierte Licht der vom Wasser bzw. Eis absorbierten Wellenlänge mit dem einer Referenzwellenlänge verglichen wird. Es ist somit möglich, die Prinzipien der Spektralanalyse und der Diffus- und Spiegelndreflexion in nur einem Gerät, bzw. einem einzigen Gehäuse auszuführen. Die zumindest eine Lichtquelleneinheit, der erste Detektor und gegebenenfalls der zweite Detektor können dazu in einem gemeinsamen einzigen und/oder einstückigen Gehäuse beispielsweise unmittelbar nebeneinander angeordnet sein.

Es kann Licht in zumindest drei voneinander verschiedenen Wellenlängen im Infrarotbereich verwendet werden. Die Lichtquelleneinheit kann dazu mehrere Lichtquellen umfassen. Z.B. kann die Lichtquelleneinheit dazu ausgelegt sein, Infrarotlicht der Wellenlängen 1300 nm, 1460 nm und 1550 nm auszusenden. Während Licht der Wellenlänge 1460 nm besonders gut von Wasser absorbiert wird, wird Licht der Wellenlänge 1550 nm gut von Eis absorbiert. Licht im Bereich von ungefähr 1300 nm kann dann als Referenzwellenlänge verwendet werden. Es können jedoch auch andere Wellenlängen verwendet werden. Insbesondere für die Referenzwellenlänge kann jede andere Wellenlänge verwendet werden, welche weder von Eis noch Wasser nennenswert absorbiert wird. Als wassersensitive Wellenlänge kann auch jede andere Wellenlänge verwendet werden, welche in Wasser erhöht absorbiert wird. Genauso kann als eissensitive Wellenlänge jede Wellenlänge gewählt werden, welche in Eis erhöht absorbiert wird. Andere interessante Wellenlängen umfassen z.B. 1190, 1040, 970, 880 und 810 nm im Infrarotbereich, sowie die sichtbaren Wellenlängen 625, 530 und 470 nm.

Die Lichtquelleneinheit kann dazu ausgelegt sein, Licht genau drei verschiedener Wellenlängen auszusenden. Dazu kann die Lichtquelleneinheit drei Lichtquellen, eine Lichtquelle für jede Wellenlänge aufweisen. Es werden nur die drei Wellenlängen verwendet, um sowohl spektral als auch spiegelnd/diffus reflektiertes Licht zu erfassen, um sowohl die Fahrbahnbeschaffenheit als auch die Art der Fahrbahn zu ermitteln bzw. zu erkennen. Jede der Lichtquellen kann einzeln ansteuerbar und unabhängig von den anderen an- und abschaltbar sein bzw. in der Intensität regulierbar sein.

Darüber hinaus können auch mehr als die oben genannten zwei oder drei voneinander verschiedenen Wellenlängen verwendet werden. Beispielsweise kann die Wellenlänge 625 nm auch zur Messung des diffus und spiegelnd reflektierten Lichts verwendet werden.

Es kann weiterhin vorgesehen sein, das ausgesendete Licht in der Intensität bzw. Amplitude zu modulieren. Das Modulieren der Intensität oder Amplitude kann durch An- und Ausschalten aller oder einzelner Lichtquellen der Lichtquelleneinheit erfolgen. Das Modulieren der Intensität bzw. das An- und Abschalten kann für jede Wellenlänge der Lichtquelleneinheit oder für jede Lichtquelle der Lichtquelleneinheit separat erfolgen. Beispielsweise kann das Modulieren der Amplitude oder Intensität bzw. das An- und Abschalten für jede Wellenlänge mit der gleichen Frequenz, jedoch phasenverschoben und/oder mit unterschiedlichen Frequenzen erfolgen. Dadurch kann beispielsweise erreicht werden, dass das Licht unterschiedlicher Wellenlängen zeitlich versetzt oder sequentiell ausgesandt wird. Z.B. kann vorgesehen sein, Licht einer ersten Wellenlänge für ein bestimmtes Zeitintervall auszusenden, dann das Licht der ersten Wellenlänge abzuschalten und eine zweite Wellenlänge einzuschalten usw. In den Detektoren wird dann jeweils Licht von nur einer Wellelänge detektiert. Dadurch kann eine spektrale Analyse oder Aufspaltung des einfallenden Lichts an den Detektoren vermieden werden. Es sind auch Mischformen verschiedener Modulationstechniken anwendbar, insbesondere frequenz- und amplitudenmodulierte optische Signalzüge mit oder ohne Unterbrechungen.

Die vorliegende Erfindung erlaubt es daher auch, einfache Detektoren als ersten oder zweiten Detektor zu verwenden. Beispielsweise können Photodioden verwendet werden. Der erste Detektor und der zweite Detektor können jeweils eine oder mehrere Photodioden umfassen. Zumindest der erste Detektor kann dazu ausgelegt sein, Licht aller von der Lichtquelleneinheit ausgesendeten Wellenlängen zu erfassen. Der Detektor kann auch alternativ oder ergänzend einen optoelektronischen Chip (z.B. CCD) oder eine andere optische Aufnahmeeinrichtung umfassen.

Der erste und der zweite Detektor können zur Erfassung bzw. zur Ermittlung von spiegelnd reflektiertem und diffus reflektiertem Licht verwendet werden. Zudem kann zumindest einer aus dem ersten und dem zweiten Detektor auch für die spektrale Ermittlung verwendet werden. Zumindest dieser Detektor ist dann dazu ausgelegt, Licht mehrerer Wellenlängen zu detektieren. In diesem Beispiel verfügt der Sensor über genau den ersten Detektor und den zweiten Detektor und es sind keine weiteren Detektoren vorgesehen.

Der Oberflächensensor kann ferner eine Auswerteinrichtung umfassen, welche eine Information über die Beschaffenheit der Fahrbahnoberfläche bzw. des Untergrunds ausgibt.

Der Oberflächensensor kann zur Einstellung einer vorhandenen Traktionshilfe verwendet werden.

Die erfindungsgemäße Vorrichtung ist zur Anbringung an einem vorhandenen Fahrzeug mit Traktionshilfe geeignet. Die Vorrichtung kann auch in Kombination mit einer Traktionshilfe zur Nachrüstung an einem Fahrzeug angeboten werden.

Die Vorrichtung und das Verfahren können mit Nutzfahrzeugen, wie Lastkraftwagen oder Omnibussen zur Personenbeförderung verwendet werden. Die Vorrichtung und das Verfahren können aber gleichwohl mit jedem anderen Fahrzeug verwendet werden, an dem eine zuschaltbare Traktionshilfe vorgesehen ist.

### Figurenbeschreibung

Im Folgenden werden weitere Einzelheiten und Beispiele der Erfindung lediglich beispielhaft und nicht einschränkend mit Bezug auf die beiliegenden Figuren angeben, welche zeigen:
Figur 1a ein erstes Beispiel eines Fahrzeugs mit einer erfindungsgemäßen Vorrichtung;
Figur 1b ein zweites Beispiel eines Fahrzeugs mit einer erfindungsgemäßen Vorrichtung;
Figur 2 ein erstes Beispiel einer Vorrichtung gemäß der vorliegenden Beschreibung;
Figur 3 ein zweites Beispiel einer Vorrichtung gemäße der vorliegenden Beschreibung; und
Figur 4 schematisch ein erfindungsgemäßes Verfahren.

### Detaillierte Beschreibung

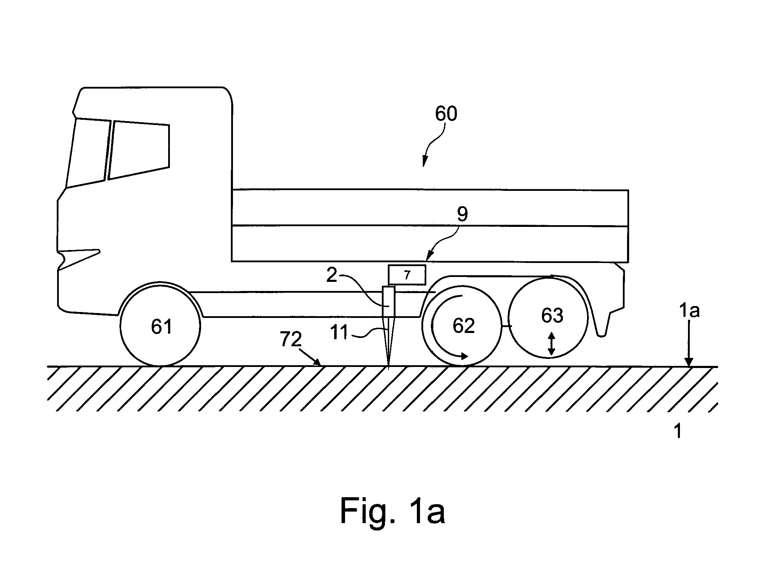

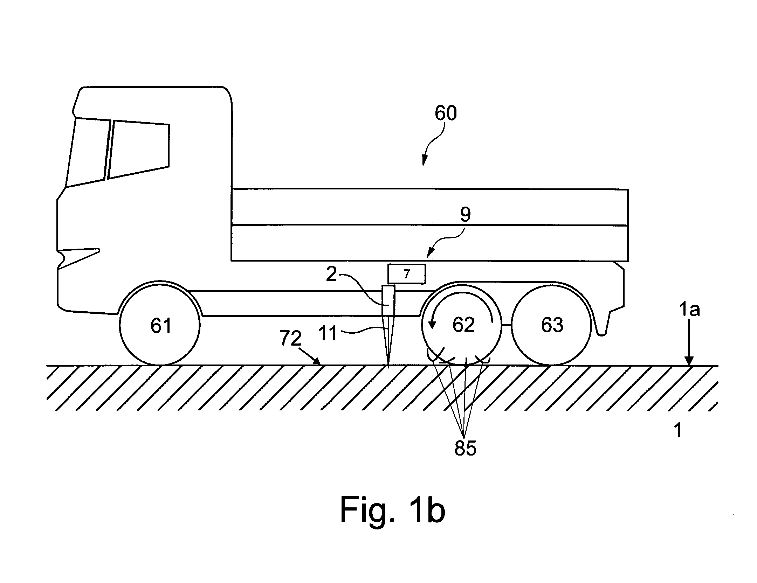

Figur 1 zeig ein erstes Beispiel wie eine erfindungsgemäße Vorrichtung 9 zur Steuerung einer Traktionshilfe 80 in einem Fahrzeug 60 ausgeführt sein kann. Das Fahrzeug 60 ist im dargestellten Beispiel ein Nutzfahrzeug wie ein Lastkraftwagen. Es kann sich aber auch um einen Omnibus oder jedes andere mehrachsige Fahrzeug, insbesondere um ein Fahrzeug mit einer Doppelachse handeln. Vorzugsweise hat das Fahrzeug mindestens drei Achsen.

Im dargestellten Beispiel hat das Fahrzeug 60 eine lenkbare Vorderachse 61, eine angetriebene zweite Achse 62 und eine nachlaufende und entlastbare dritte Achse 63. Die dritte Achse 63 dient dazu einen Teil der Last aufzunehmen, beispielsweise wenn das Fahrzeug 60 beladen ist und so im normalen Fahrbetrieb die Achslast auf die zweite Achse 62 zu verringern. Um insbesondere die Reifen der dritten Achse 63 nicht unnötig zu verschleißen ist es seit langem bekannt die dritte Achse 63 anzuheben, wenn das Fahrzeug 60 nicht beladen ist und die zulässige Gesamtachslast der zweiten Achse 62 somit nicht überschritten wird. Im dargestellten Beispiel ist die dritte Achse 63 angehoben bzw. entlastet dargestellt. Die dritte Achse 63 kann auch entlastet beziehungsweise angehoben werden, um die Traktion der zweiten Achse 62 zumindest kurzfristig zu erhöhen. In diesem Fall kann die zulässige Achslast der zweiten Achse 62 auch zumindest kurzfristig überschritten werden. Somit stellt die entlastbare dritte Achse 63 eine Traktionshilfe 80 dar

Im dargestellten Beispiel ist die entlastbare dritte Achse 63 hinter der angetriebenen zweiten Achse 62 dargestellt. Es ist jedoch genauso möglich, dass die entlastbare dritte Achse 63 in Fahrtrichtung vor der angetriebenen zweiten Achse 62 angeordnet ist.

In der Figur 1 ist vor der angetriebenen zweiten Achse 62 ein optischer Oberflächensensor beziehungsweise Sensor 2 angeordnet. Der Sensor 2 ist so angeordnet, dass ein von dem Sensor 2 emittierter Lichtstrahl 11 im Wesentlichen senkrecht auch die Fahrbahnoberfläche 1a der Fahrbahn 1 trifft. Die Anordnung des Sensors 2 vor der angetriebenen zweiten Achse 62 und in der Spur der angetriebenen Räder der zweiten Achse 62 erlaubt es eine Information über den Zustand beziehungsweise die Beschaffenheit der Fahrbahnoberfläche des relevanten angetriebenen Rades zu erhalten. Beispielsweise kann auch vorgesehen sein einen Sensor 2 vor jedem angetriebenen Rad vorzusehen, so dass individuelle Informationen über die Beschaffenheit der Fahrbahnoberfläche vor jedem einzelnen angetriebenen Rad, bzw. für jede Fahrbahnseite erhalten werden kann. Damit ist es auch möglich die Traktionshilfe für jedes angetriebene Rad individuell einzustellen.

Figur 1b zeigt ein Fahrzeug 60a, bei welchem die Traktionshilfe 80 in Form einer automatischen Schneekette 85 ausgeführt ist. Dieses Fahrzeug unterscheidet von dem Fahrzeug der Figur 1 lediglich dadurch, das zusätzlich die Schneeketten im Bereich der zweiten angetriebenen Achse 62 angeordnet sind.

Der Sensor 2 ist mit einer Steuerung 7 verbunden, welche an dem Sensor 2 oder an einer anderen Stelle im Fahrzeug 60 angeordnet sein kann. Die Steuerung 7 dient dazu, die von dem optischen Sensor 2 erfassten Daten auszuwerten und zu bestimmen, ob der Reibwert der Fahrbahnoberfläche 1a beispielsweise unter einem vorbestimmten Wert liegt, oder ob aus einem anderen Grund die Traktionshilfe 80 zugeschaltet werden soll. Sind mehrere Traktionshilfen 80 vorgesehen, kann die Steuerung 7 auch dazu ausgelegt sein, zu bestimmen, welche der Traktionshilfen 80 angesteuert wird.

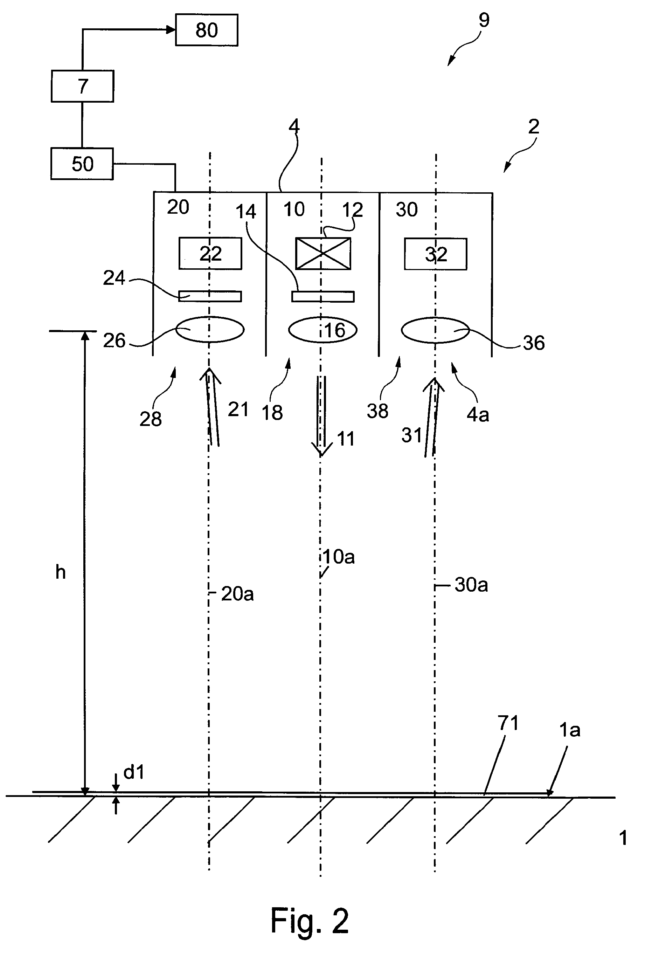

Die Figur 2 zeigt eine Vorrichtung 9. Die Vorrichtung 9 verfügt über einen Oberflächensensor 2 und eine Steuerung 7. Der Oberflächensensor 2 umfasst eine Lichtemittereinrichtung 10 und zumindest eine erste Detektoreinrichtung 20. Im dargestellten Beispiel ist ferner eine zweite Detektoreinrichtung 30 vorgesehen. Der Oberflächensensor 2 kann ein handelsüblicher Oberflächensensor 2 sein welcher zur optischen Erfassung der Fahrbahnbeschaffenheit der Fahrbahnoberfläche 1 a ausgelegt ist.

Der Oberflächensensor 2, hierein auch als Sensors 2 zur Erkennung der Beschaffenheit, insbesondere eines Zustands und der Art der Oberfläche einer Fahrbahn 1 bzw. Fahrbahnoberfläche 1 a bezeichnet, ist dazu ausgelegt, an einem Kraftfahrzeug 60 angebracht zu werden.

Der Sensor 2 umfasst in einem Gehäuse 4 drei Einrichtungen, eine Lichtemittereinrichtung 10, eine erste Detektoreinrichtung 20 und eine zweite Detektoreinrichtung 30. Der Lichtemittereinrichtung 10 weist ein Lichtemitterfenster oder eine Lichtemitteröffnung 18 in dem Gehäuse 4 auf, die erste Detektoreinrichtung 20 weist ein erstes Detektorfenster oder eine erste Detektoröffnung 28 in dem Gehäuse 4 auf und die zweite Detektoreinrichtung 30 weist ein zweites Detektorfenster oder eine zweite Detektoröffnung 38 in dem Gehäuse 4 auf. Die Lichtemitteröffnung 18, die erste Detektoröffnung 28 und die zweite Detektoröffnung 38 sind an der gleichen Seite 4a des Gehäuses 4 angeordnet und zu der Fahrbahn 1 hin ausgerichtet, wenn der Sensor 2 betriebsbereit an einem Fahrzeug montiert ist. Der Sensor 2 ist so ausgerichtet, dass der ausgesendete Lichtstrahl 11 ungefähr senkrecht auf die Fahrbahn 1 bzw. Fahrbahnoberfläche 1 a fällt, d.h. die optische Achse des Lichtemitterabschnitts 10a, bzw. die Lichtemitterachse 11a steht im Wesentlichen senkrecht zu der Fahrbahn 1 bzw. Fahrbahnoberfläche 1a. Im dargestellten Beispiel befindet sich ein Wasserfilm 71 der Dicke d1 auf der Fahrbahnoberfläche 1a. Die Fahrbahnoberfläche kann jedoch auch schneebedeckt, vereist oder trocken sein oder eine andere Beschaffenheit haben.

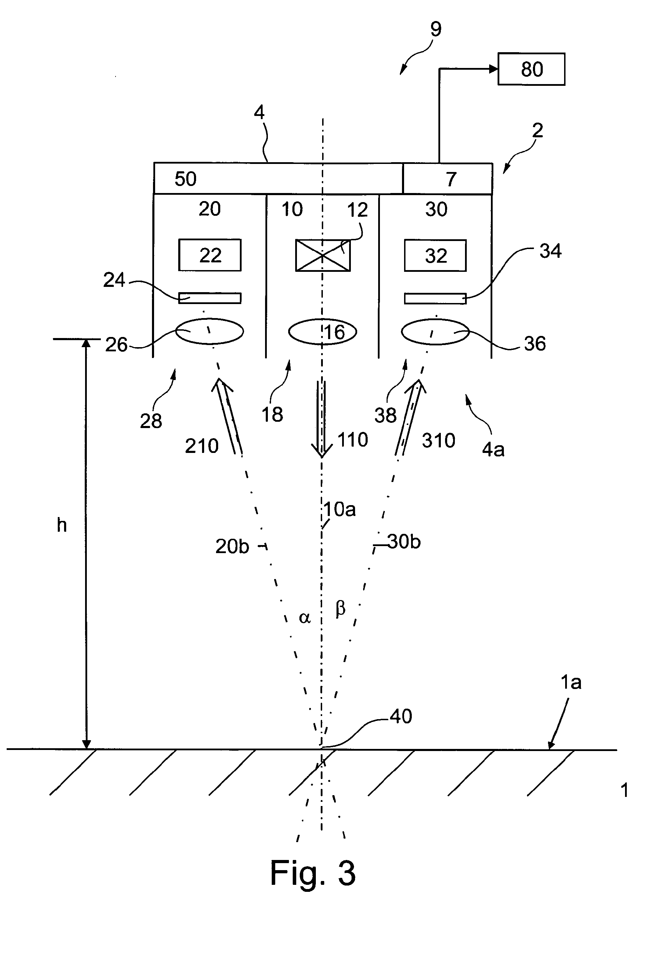

In dem in den Figuren 2 und 3 dargestellten Beispielen sind die Lichtemittereinrichtung 10, die erste Detektoreinrichtung 20 und die zweite Detektoreinrichtung 30 in einer Reihe angeordnet und die Lichtemittereinrichtung 10 ist zwischen der ersten Detektoreinrichtung 20 und der zweiten Detektoreinrichtung 30 angeordnet.

Die Lichtemittereinrichtung 10, die erste Detektoreinrichtung 20 und die zweite Detektoreinrichtung 30 können jedoch auch getrennt voneinander angeordnet sein und müssen nicht in einem Gehäuse zusammengefasst sein.

In der Lichtemittereinrichtung 10 ist eine Lichtquelleneinheit 12 angeordnet, welche zur Aussendung von Licht mehrerer unterschiedlicher Wellenlängen ausgelegt ist. Die Lichtquelleneinheit 12 kann dazu eine oder mehrere Leuchtdioden (LEDs), Laserdioden, eine andere geeignete Lichtquelle oder eine Kombination daraus umfassen und ist dazu geeignet, Licht mehrerer voneinander verschiedener Wellenlängen auszusenden. Beispielsweise kann die Lichtquelleneinheit 12 Licht zumindest mit den Wellenlängen 1300 nm, 1460 nm und 1550 nm aussenden. Die vorgesehenen Wellenlängen können jedoch dem jeweiligen Einsatzzweck angepasst werden.

Der Lichtquelleneinheit 12 ist im in der Figur 2 dargestellten Beispiel in Richtung des ausgesandten Lichtstrahls 11 ein Lichtquellenpolarisator oder Lichtquellenpolarisationsfilter 14 nachgeschaltet, welcher das von der Lichtquelleneinheit 12 ausgesandte Licht in eine vorbestimmte Richtung polarisiert.

Ferner ist eine Emitteroptik 16 vorgesehen, um das ausgesendete Licht entlang eines emittierten Lichtstrahls 11 auf einen bestimmten Bereich auf dem Untergrund oder der Fahrbahn 1 bzw. der Fahrbahnoberfläche 1 a unter dem Fahrzeug 60 auszurichten bzw. zu fokussieren. Die optische Achse der Emitteroptik 16 kann die optische Achse 10a des Lichtemitterabschnitts 10 definieren. Die Emitteroptik 16 kann aus einer Emitterlinse bestehen oder mehrere Linsen und/oder andere optische Element umfassen.

Der erste Detektorabschnitt 20 umfasst einen ersten Detektor 22, beispielsweise eine oder mehrere Photodioden, dazu ausgelegt, Licht aller von der Lichtquelleneinheit 10 ausgesandten Wellenlängen zu detektieren. Der erste Detektor 22 kann dazu auch mehrere nebeneinander angeordnete Photodioden oder einen oder mehrere optoelektronische Einheiten (z.B. CCD, CMOS) umfassen.

An dem ersten Detektor 22 ist eine erste Sammeloptik 26und ein erster Polarisator oder erster Polarisationsfilter 24 angeordnet. Die erste Sammeloptik 26 kann aus einer einzelnen ersten Sammellinse bestehen oder mehrere Linsen und/oder weitere optische Elemente umfassen. Die Polarisierungsrichtung des ersten Polarisationsfilters 24 ist senkrecht zu der des Lichtquellenpolarisationsfilters 14 und damit im Wesentlichen senkrecht zu der vorbestimmten Polarisierungsrichtung. Spiegelnd reflektiertes, in der vorbestimmten Richtung polarisiertes Licht wird damit herausgefiltert und lediglich diffus reflektiertes Licht gelangt zu dem ersten Detektor 22. Der erste Detektor 22 dient somit als "Streuungsdetektor".

Eine erste Achse 20a kann im Wesentlichen der optischen Achse der ersten Sammeloptik 26 und/oder des ersten Detektorabschnitts 20 entsprechen und im Wesentlichen parallel zu der Emitterachse 10a, welche im Wesentlichen der optischen Achse der Emitteroptik 16 und/oder des Lichtemitterabschnitts 10 entspricht, ausgerichtet sein.

In dem zweiten Detektorabschnitt 30, welcher auf der dem ersten Detektorabschnitt 20 gegenüberliegenden Seite des Lichtemitterabschnitts 10 in dem Gehäuse 4 des Sensors 2 angeordnet ist, ist ein zweiter Detektor 32 angeordnet.

Der zweite Detektor 32 kann ebenfalls eine Photodiode umfassen, welche dazu ausgelegt ist, zumindest Licht einer von der Lichtquelleneinheit 12 ausgesandten Wellenlängen zu detektieren. Der zweite Detektor 32 kann jedoch ebenfalls mehrere nebeneinander angeordnete Photodioden umfassen und dazu ausgelegt sein, Licht mehrerer verschiedener Wellenlängen oder Wellenlängenbereiche zu detektieren.

Dem zweiten Detektor 32 ist eine zweite Sammeloptik 36 zugeordnet, um das reflektierte Licht auf den zweiten Detektor 32 zu fokussieren und in diesem zu detektieren. Die zweite Sammeloptik 36 kann aus einer einzelnen zweiten Sammellinse bestehen oder mehrere Linsen und/oder weitere optische Elemente umfassen. Im Gegensatz zu dem ersten Detektor 22, weist der zweite Detektor 32 im in der Figur 1 dargestellten Beispiel keinen Polarisator oder Polarisationsfilter auf. Da bereits das emittierte Licht polarisiert ist, ist dies auch nicht notwendig. Von dem zweiten Detektor wird somit diffus reflektiertes und spiegelnd reflektiertes Licht detektiert, welches entlang des zweiten Detektorstrahlengangs 31 reflektiert wird. Jedoch kann auch der zweite Detektor 32 einen Polarisationsfilter (nicht dargestellt) aufweisen, dessen Polarisationsrichtung parallel zu derjenigen des Emitterpolarisators 16 ist, um lediglich spiegelnd reflektiertes Licht in der zweiten Photodiode 36 zu detektieren.

Eine zweite Achse 30a kann im Wesentlichen der optischen Achse der zweiten Sammeloptik 36 und oder des zweiten Detektorabschnitts 30 entsprechen und im Wesentlichen parallel zu der Emitterachse 10a, welche im Wesentlichen der optischen Achse der Emitteroptik 16 und/oder des Lichtemitterabschnitts 10 entspricht, ausgerichtet sein.

Der beschriebene Sensor kann im sichtbaren Lichtbereich, beispielsweise bei einer Wellenlänge von ungefähr 625 nm betrieben werden, um spiegelnd reflektiertes Licht und diffus reflektiertes Licht zu messen. Aus dem Verhältnis von dem im ersten Detektor 22 gemessenen diffus reflektierten Licht zu dem im zweiten Detektor 32 zusätzlich gemessenen spiegelnd reflektierten Licht kann auf die Fahrbahnhelligkeit und Fahrbahnrauhigkeit geschlossen werden und damit bestimmt werden, ob sich das Fahrzeug beispielsweise auf einer Asphalt-oder Betonfahrbahn befindet.

Der beschriebene Sensor kann auch im Infrarotbereich bei verschiedenen Wellenlängen verwendet werden. Hierzu kann der erste Detektor 22 und/oder der zweite Detektor 32 verwendet werden. Beispielsweise wird Infrarotlicht der Wellenlänge 1460 nm besonders gut von Wasser absorbiert, so dass Licht dieser Wellenlänge bei nasser Fahrbahn nur in geringem Maße zu dem ersten Detektor 22 bzw. dem zweiten Detektor 32 zurückreflektiert wird. Bei trockener Fahrbahn wird diese Wellenlänge dahingegen normal reflektiert. Infrarotlicht der Wellenlänge 1550 nm wird dahingegen gut von Eis absorbiert. Durch Vergleich der Reflexion dieser beiden Wellenlängen und Berücksichtigung einer Referenzwellenlänge kann auf Eis oder Wasser auf der Fahrbahn geschlossen werden. Die Referenzwellenlänge, welche weder von Eis noch von Wasser nennenswert absorbiert wird, z.B. 1300 nm, dient als Bezugsgröße zur Bewertung des Absorptionsgrades der beiden anderen Wellenlängen. Dann können die gemessenen Intensitätsverhältnisse bei den Wellenlängen 1550 nm/1300 nm mit dem Verhältnis 1460 nm/1300 nm in bekannter Weise in Relation gesetzt werden, um Informationen über Wasser und Eis auf der Fahrbahn oder eine trockene Fahrbahn zu erlangen.

Die verschiedenen Wellenlängen können parallel, insbesondere aber sequentiell zeitlich versetzt, ausgesandt werden. Somit wird jeweils nur Licht einer Wellenlänge zu einem Zeitpunkt ausgesandt und dementsprechend detektiert. Dies erlaubt es, auf eine aufwändige spektrale Analyse oder Strahlaufteilung zu verzichten.

Der Sensor 2 verfügt ferner über eine Auswerteinrichtung 50, mit welcher die von dem ersten Detektor 22 und dem zweiten Detektor 32 erfassten bzw. ermittelten Daten verarbeitet werden. Die Auswerteinrichtung 50 kann außerhalb des Gehäuses 4 angeordnet sein und sich beispielsweise an einem anderen Ort in dem Fahrzeug 60 befinden. Die Auswerteinrichtung 50 kann mit dem ersten Detektor 22 und dem zweiten Detektor 32 über ein Kabel oder eine drahtlose Verbindung verbunden sein. Die Auswerteinrichtung kann auch eine Steuerung für die Lichtquelleneinheit 21 umfassen oder mit einer Steuerung verbunden sein. Die Auswerteinheit 50 und/oder die Steuerung können jedoch auch an oder in dem Gehäuse 4 angeordnet sein bzw. in diese integriert sein, wie mit Bezug auf die Figur 2 dargestellt.

Mit dem beschriebenen Sensor 2 können mit einem kompakten und kostengünstigen Aufbau sowohl spektrale Reflexion, als auch spiegelnde und diffuse Reflexion in kurzer zeitlicher Abfolge gemessen und auf dieser Basis auf Fahrbahnart und -zustand geschlossen werden. Dadurch entsteht eine bessere und genauere Information über die Art und den tatsächlichen Zustand der Fahrbahn 1 bzw. Fahrbahnoberfläche 1a unter dem Fahrzeug 60. Für die Messung ist nur der eine Sensor 2 erforderlich.

Soll nur spektrale Reflexion gemessen werden, da beispielsweise die Messgenauigkeit dafür ausreichend ist, kann gegebenenfalls der zweite Detektorabschnitt 30 weggelassen werden.

Die Auswerteinrichtung 50 des Sensors 2 ist mit einer Steuerung 7 verbunden. Die Steuerung 7 dient dazu die Daten des Sensors 2 auszuwerten und zu bestimmen ob der Reibwert der Fahrbahnoberfläche 1a unter einem vorgegebenen Wert liegt, beziehungsweise ob eine schneebedeckte oder vereiste Fahrbahnoberfläche 1a erkannt wurde. Wurde eine entsprechende Fahrbahnoberfläche 1a erkannt, kann die Steuerung 7 die Traktionshilfe 80 anweisen die Traktionshilfe 80 zuzuschalten und beispielsweise die automatischen Schneeketten 85 zu aktivieren oder die dritte Achse 63 zu entlasten.

Andersrum kann bei aktivierter Traktionshilfe 80, wenn die Fahrbahnoberfläche 1a als trocken oder nass ermittelt wurde, die Steuerung 7 die Traktionshilfe 80 anweisen die Traktionshilfe 80 abzuschalten und beispielsweise die Schneeketten 85 abzuschalten oder gegebenenfalls die dritte Achse 63 wieder zu belasten.

Die Figur 3 zeigt ein weiteres Beispiel für eine Vorrichtung 9. Die mit Bezug auf die Figur 3 dargestellten und beschriebenen Merkmale können je nach Anwendung mit den mit Bezug auf die Figur 2 dargestellten und beschriebenen Merkmalen kombiniert oder ausgetauscht werden.

Der in der Figur 3 dargestellte Sensor 2 entspricht dem mit Bezug auf die Figur 2 beschriebenen Sensor mit dem Unterschied, dass kein Lichtquellenpolarisator vorgesehen ist. Der ausgesandte Lichtstrahl 110 ist in diesem Fall nicht polarisiert. Um dennoch spiegelnd reflektiertes Licht herausfiltern zu können, ist ein zweiter Polarisationsfilter 34 im Strahlengang vor dem zweiten Detektor 32 angeordnet. Die Polarisationsrichtung des zweiten Polarisationsfilters 34 ist im Wesentlichen senkrecht zu der Polarisationsrichtung des ersten Polarisationsfilters 24. Alle übrigen Elemente des Sensors 2 können denen des mit Bezug auf die Figur 1 dargestellten Sensors entsprechen.

Im in der Figur 3 dargestellten Beispiel befindet sich weder ein Wasserfilm 71 noch eine Eisschicht 72 auf der Fahrbahnoberfläche 1 a.

Im in der Figur 3 dargestellten Beispiel ist die erste Achse 20b, welche der optischen Achse der ersten Sammeloptik 26 und/oder des gesamten ersten Detektorabschnitts 20 entsprechen kann, in einem Winkel α zur Emitterachse 10a ausgerichtet, wobei der Winkel α maximal ungefähr 10° beträgt. Entsprechend kann die zweite Achse 30b, welche der optischen Achse der zweiten Sammeloptik 36 und/oder des gesamten zweiten Detektorabschnitts 30 entsprechen kann, in einem Winkel β zur Emitterachse 10a ausgerichtet sein, wobei der Winkel β ebenfalls maximal ungefähr 10° beträgt. Der Schnittpunkt 40 der Emitterachse 10a mit der ersten Achse 20b und/oder der zweiten Achse 30b kann auf der Fahrbahnoberfläche 1 a liegen oder in einem Abstand von bis zu 50cm von der Fahrbahnoberfläche 1 a liegen.

Es besteht ferner die Möglichkeit, sowohl einen Lichtquellenpolarisator oder Lichtquellenpolarisationsfilter 14 an der Lichtquelleneinheit 12 vorzusehen, wie mit Bezug auf die Figur 1 beschrieben, als auch einen zweiten Polarisator oder zweiten Polarisationsfilter 34 an dem zweiten Detektor 32. Typischerweise sind dann die Polarisationsrichtungen des Lichtquellenpolarisationsfilters 14 und des zweiten Polarisationsfilters 34 parallel zueinander ausgerichtet. Die Polarisationsrichtungen des Lichtquellenpolarisationsfilters 14 und des zweiten Polarisationsfilters 34 des zweiten Detektors 32 sind jedoch im Wesentlichen senkrecht zu der Polarisationsrichtung des ersten Polarisators oder ersten Polarisationsfilters 24 angeordnet.

In der Figur 3 ist ferner die Auswerteinrichtung 50 innerhalb des Gehäuses 4 des Sensors 2 angeordnet bzw. in das Gehäuse 2 integriert dargestellt. Es versteht sich, dass die Auswerteinheit auch, wie in Figur 1 dargestellt, außerhalb des Sensors 2 vorgesehen sein kann.

Der Sensor 2 und insbesondere die Emitteroptik 16 und die erste Sammeloptik 26 beziehungsweise gegebenenfalls auch die zweite Sammeloptik 36 können dazu ausgelegt sein in einer bestimmten Höhe oder einem bestimmten Höhenbereich über der Fahrbahnoberfläche 1a angeordnet zu werden. Beispielsweise kann der Sensor 2 dazu ausgelegt sein in einer Höhe h beziehungsweise einem Abstand von ungefähr 10 cm bis ungefähr 1 m von der Fahrbahnoberfläche 1 a angeordnet zu werden, wobei der Abstand einen jeweiligen Einsatzzweck angepasst werden kann. Für die Verwendung des Sensors 2 in einem Personenkraftwagen kann die Höhe h im Bereich von ungefähr 10 cm bis 40 cm liegen. Bei einer Verwendung des Sensors 2 in einem Nutzfahrzeug, einem Omibus oder einem Geländefahrzeug kann die Höhe h ungefähr 30 cm bis ungefähr 100 cm betragen, insbesondere in einem Bereich von 50 cm bis 80 cm.

Bei dem Sensor 2 der Figur 3 ist die Steuerung 7 ebenfalls innerhalb des Gehäuses 4 des Sensors 2 angeordnet. Die Steuerung 7 kann mit der Auswerteinrichtung 50 des Sensors 2 verbunden sein oder in diese integriert sein.

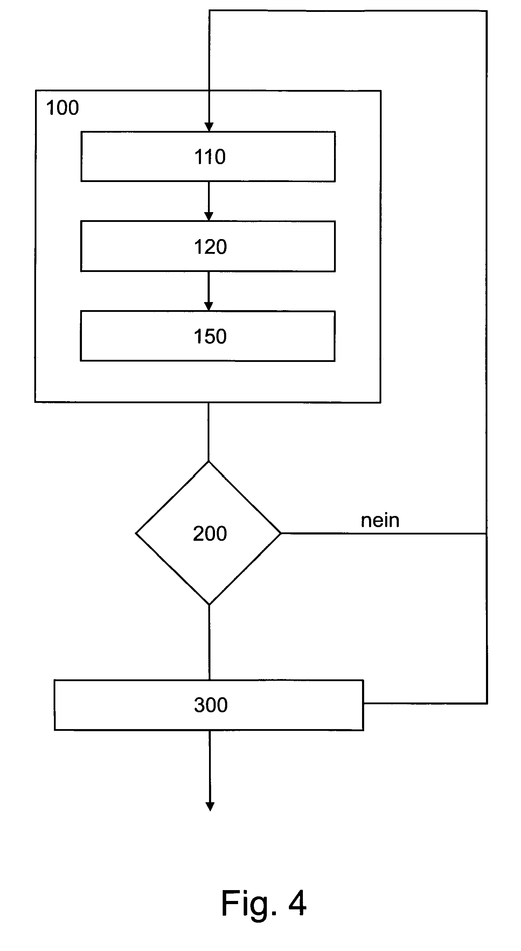

Die Figur 4 zeigt beispielhaft ein Verfahren zur Steuerung einer Traktionshilfe. Das Verfahren umfasst den Schritt des Erfassens einer Information 100 über eine Fahrbahnbeschaffenheit beziehungsweise die Beschaffenheit einer Fahrbahnoberfläche 1a. Das Erfassen der Information 100 über die Beschaffenheit der Fahrbahnoberfläche 1a umfasst das Aussenden von Licht 110 von zumindest einer Wellenlänge, bevorzugt von mindestens drei voneinander verschiedenen Wellenlängen im Infrarotbereich und das Detektieren 120 von an der Fahrbahnoberfläche 1a reflektiertem Licht. Wie oben beschrieben, kann das Licht der unterschiedlichen Wellenlängen zeitlich versetzt, beispielsweise mit unterschiedlicher Frequenz moduliert oder phasenverschoben mit gleicher Frequenz moduliert ausgesendet und dementsprechend detektiert werden. Das erlaubt es, nur einen Detektor für mehrere Wellenlängen und gegebenenfalls die Hintergrundstrahlung bei ausgeschalteten Lichtquellen zu verwenden.

Aus dem Verhältnis der Lichtintensitäten des reflektierten Lichts der unterschiedlichen Wellenlängen beziehungsweise des Verhältnisses aus diffus reflektiertem und spiegelnd reflektiertem Licht wird dann in Schritt 150 eine Information über die Beschaffenheit der Fahrbahnoberfläche 1a ermittelt, das heißt ob die Fahrbahn 1a trocken, nass, vereist, schneebedeckt ist oder eine andere Beschaffenheit hat. In diesem Schritt kann ebenfalls die Dicke eines Wasserfilms oder die Dicke einer Eisschicht auf der Fahrbahnoberfläche 1a ermittelt werden.

Wurde eine eisbedeckte oder schneebedeckte Fahrbahnoberfläche 1a erkannt, so kann in Schritt 200 gegebenenfalls unter Hinzunahme weiterer Parameter wie der Fahrzeuggeschwindigkeit oder einer Steigung, an der sich das Fahrzeug gerade befindet, bestimmt werden, ob eine Traktionshilfe 80 zugeschaltet werden soll. Die Steigung kann beispielsweise mit einem Neigungssensor erfasst werden. Wird in Schritt 200 bestimmt, dass eine Traktionshilfe zugeschaltet werden soll, wird in Schritt 300 die Traktionshilfe 80 aktiviert.

Anstatt dem Zuschalten der Traktionshilfe 80, kann bei bereits zugeschalteter Traktionshilfe in Schritt 200 auch bestimmt werden, dass die Traktionshilfe 80 nicht mehr erforderlich ist, weil beispielsweise die Fahrbahnoberfläche 1 a jetzt als trocken oder nass erfasst wurde. Dann kann in Schritt 300 die Traktionshilfe deaktiviert werden.

Die vorangehende Beschreibung wurde im Hinblick auf die in den Figuren dargestellten Beispiele gegeben. Jedoch wird der Fachmann die angegebenen Beispiele ohne weiteres modifizieren oder andere Traktionshilfen entsprechend anpassen. Auch wird der Fachmann weitere Anwendungsmöglichkeiten der erfindungsgemäßen Vorrichtung und des erfindungsgemäßen Verfahrens finden, beispielsweise die Anbringung an anderen Stellen eines Fahrzeugs.

Der Fachmann wird ebenfalls andere als die angegebenen Wellenlängen in Erwägung ziehen um die Messergebnisse an unterschiedliche Anforderungen anzupassen. Es versteht sich, dass die angegebenen Wellenlängen nicht auf genau die Werte eingeschränkt sind, sondern einen Wellenlängenbereich umfassen können, welcher die angegebenen diskreten Wellenlängen enthält.

## Patentansprüche

1. Verfahren zur Steuerung einer Traktionshilfe (80) eines Fahrzeugs (60), wobei das Verfahren umfasst:
- Aussenden von Licht (11) zumindest einer Wellenlänge auf eine Fahrbahnoberfläche (1a) unter dem Fahrzeug (60);
- Detektieren von an der Fahrbahnoberfläche (1a) reflektiertem Licht (21, 31) der zumindest einen Wellenlänge;
- Ermitteln zumindest einer Information (100) über die Beschaffenheit der Fahrbahnoberfläche (1a) anhand des detektieren reflektierten Lichts (21, 31) der zumindest einen Wellenlänge;
- Ermitteln (200) anhand der zumindest einen Information, ob der Reibwert der Fahrbahnoberfläche (1 a) eine Traktionshilfe (80, 85) erforderlich macht oder ob die Traktionshilfe (80, 85) nicht mehr erforderlich ist; und
- Steuern (300) der Traktionshilfe (80, 85), wenn ermittelt wurde ob die Traktionshilfe (80, 85) erforderlich ist oder nicht mehr erforderlich ist.

2. Verfahren nach Anspruch 1, wobei die zumindest eine Information umfasst, ob die Fahrbahnoberfläche (1a) nass, vereist, schneebedeckt und/oder trocken ist.

3. Verfahren nach Anspruch 1 oder 2, wobei das Steuern (300) der Traktionshilfe (80, 85) das Anschalten und/oder Abschalten von automatischen Schneeketten (85) umfasst.

4. Verfahren nach einem der vorangehenden Ansprüche, wobei das Steuern (300) der Traktionshilfe (80) das Entlasten einer Achse (63) des Fahrzeugs (60) umfasst.

5. Verfahren nach einem der vorangehenden Ansprüche, wobei das Aussenden von Licht und das Detektieren von an der Fahrbahnoberfläche (1a) reflektierten Lichts von drei unterschiedlichen Wellenlängen im Infrarotbereich umfasst.

6. Verfahren nach einem der vorangehenden Ansprüche, wobei das Detektieren von an der Fahrbahnoberfläche (1 a) reflektierten Lichts, das Detektieren von diffus reflektiertem und spiegelnd reflektiertem Licht umfasst.

7. Verwendung eines optischen Oberflächensensors (2) zur Einstellung einer Traktionshilfe (80, 85).

8. Vorrichtung (9) zur Steuerung einer Traktionshilfe (80) eines Fahrzeugs (60), wobei die Vorrichtung (9) umfasst:
einen optischen Oberflächensensor (2) zur Ermittlung zumindest einer Information über die Beschaffenheit einer Fahrbahnoberfläche (1a), und
eine Steuerung (7), welche mit dem optischen Oberflächensensor (2) und der Traktionshilfe (80) verbunden ist und anhand der zumindest einer Information über die Fahrbahnoberfläche (1a) die Traktionshilfe steuert.

9. Vorrichtung (9) nach Anspruch 8, wobei die zumindest eine Information über die Beschaffenheit umfasst, ob die Fahrbahnoberfläche (1a) nass, vereist, schneebedeckt und/oder trocken ist.

10. Vorrichtung (9) nach Anspruch 8 oder 9, wobei die Traktionshilfe (80, 85) automatische Schneeketten (85) umfasst.

11. Vorrichtung (9) nach einem der Ansprüche 8 bis 10, wobei Traktionshilfe (80) eine Achsentlastung umfasst.

12. Vorrichtung (9) nach einem der Ansprüche 8 bis11, wobei der optische Oberflächensensor (2) umfasst:
- eine Lichtquelleneinheit (12) zum Aussenden von Licht von zumindest einer Wellenlänge auf den Untergrund (1) und
- zumindest einen ersten Detektor (20, 30), um von der Fahrbahnoberfläche (1a) reflektiertes Licht zu detektieren

13. Vorrichtung (9) nach Anspruch 12, wobei die Lichtquelleneinheit (12) und der zumindest eine Detektor (20, 30) in einem Gehäuse (4) angeordnet sind.

14. Vorrichtung nach Anspruch 12 oder 13, zudem umfassen zumindest eine zweiten Detektor (30) zum Erfassen von spiegelnd reflektiertem Licht.

15. Vorrichtung (9) nach einem der Ansprüche 12 bis 14, wobei die Lichtquelleneinheit (12) drei Lichtquellen zur Aussendung von Licht dreier unterschiedlicher Wellenlängen umfasst.

16. Vorrichtung (9) nach einem der Ansprüche 8 bis 15, welcher zur Anbringung an einem Fahrzeug (60) geeignet ist.

17. Fahrzeug (60) mit einer Vorrichtung (9) nach einem der Ansprüche 8 bis 16.
